# EUROPEAN PATENT SPECIFICATION

(11) **EP 2 118 710 B1**
(45) Date of publication and mention of the grant of the patent: **06.01.2016**
(21) Application number: 08702315.6
(22) Date of filing: 23.01.2008
(51) Int. Cl.: G05B 19/042

(54) **PORTABLE TECHNICAL ASSISTANCE DEVICE FOR A HOUSEHOLD ELECTRICAL APPLIANCE**
TRAGBARE TECHNISCHE HILFSVORRICHTUNG FÜR EINE ELEKTRISCHE HAUSHALTSANWENDUNG
DISPOSITIF D'ASSISTANCE TECHNIQUE PORTABLE POUR UN APPAREIL ÉLECTRIQUE DOMESTIQUE

(30) Priority: 08.02.2007 IT RN20070007
(43) Date of publication of application: 18.11.2009
(73) Proprietor: Indesit Company S.p.A., 60044 Fabriano (AN) (IT)
(72) Inventor: BENEVENTI, Sandro, I-41100 Modena (IT); MARINI, Marco, I-62024 Matelica (Macerata) (IT)
(74) Representative: Santonicola, Paolo
(86) International application number: PCT/IB2008/000169
(87) International publication number: WO 2008/096216

(56) References cited:
- EP-A- 0 884 701
- EP-A- 1 386 199
- WO-A1-2006/135758
- US-A1- 2002 059 270
- US-A1- 2002 130 784
- US-A1- 2005 096 760
- US-B1- 7 069 333

## Description

### Technical Field

The present invention relates to a portable technical assistance device for a household electrical appliance and a technical assistance system comprising the device.

Technical assistance systems are used to facilitate the work of technical assistance personnel to resolve faults or malfunctions in a household electrical appliance, in particular a household electrical appliance with an electronic control system.

There has recently been a big increase in the use of electronics in the household electrical appliances sector. But this has created a series of disadvantages, for example linked to the fact that the technical assistance personnel are sometimes not very familiar with electronics, since their expertise is above all electromechanical.

Moreover, the technical assistance personnel do not always have available suitable analysis instruments, able for example to detect with certainty whether or not the fault associated with a household electrical appliance malfunction relates to electronic, electrical or mechanical parts.

### Background Art

There are prior art household electrical appliances which comprise an electronic control system integrated in the household electrical appliance. The electronic control system detects the occurrence of a condition which indicates a malfunction.

However, said solution is not without disadvantages.

The complexity of the household electrical appliance hardware is increased, consequently increasing the costs of each household electrical appliance and the overall reliability is reduced due to the greater number of components used.

Moreover, such a control system cannot measure the state of the various electrical loads, identifying incipient fault situations in advance.

Another disadvantage is that the cause of the malfunction detected by the control system is not identified with certainty, as indicated in the example below.

There are washing machines equipped with a self-diagnosis system able to check whether or not the water is heated to a predetermined temperature.

The indirect control by the control system usually consists of checking whether or not the target temperature is reached within a predetermined maximum time. If the temperature is not reached within the maximum time set, a fault is indicated and the washing program is interrupted.

The cause of such a fault may be any of the following:
- a temperature sensor fault;
- a break in the temperature sensor wiring;
- a break in an electric channel which carries a temperature sensor signal from a connector to the relative input of a microcontroller;
- a heating element fault;
- a break in the heating element wiring;
- a fault in an actuator (relay) which controls the heating element;
- a fault in the control electronics (hardware) of the actuator which controls the heating element.

The indicating of a fault in the water heating system supplied by a typical self-diagnosis system for washing machines is, without doubt useful, but does not allow the technical assistance personnel to immediately work on the point that is actually faulty. They must begin a sequential test procedure, using suitable instruments (e.g.: testers) and, if there is any uncertainty, will try changing the electronic control system. Very often the electronics are substituted as a preliminary operation before any actual fault-finding efforts and, if the malfunction remains even after this substitution, more in-depth testing is performed to solve the problem. In some cases, to avoid appearing less than professional to the user, the technical assistance personnel could be tempted not to return the old electronic board to its place, despite the fact that it is operating perfectly. In such a case, depending on whether or not the product was still under warranty, the resulting unnecessary cost for the manufacturer or user would be significant. There are also household electrical appliances of the type described in patent WO01/28067. Said household electrical appliances comprise a control system able to generate and store in the memory information about household electrical appliance operation. In particular, said household electrical appliance can supply detailed historical information, associated with the last period of operation (whose duration can be selected as required) . The operating information, in particular historical, is very useful for carrying out an in-depth analysis of the household electrical appliance operating state and for immediately tracing the causes of any fault. But that information on its own is not enough, because the household electrical appliance in patent WO01/28067 does not have sufficient processing power to run an effective diagnostic program, which allows the identification and certain locating of a fault and which therefore allows rapid, correct maintenance of the household electrical appliance (by "locating" a fault experts in the household electrical appliances sector mean attributing a fault to a particular component of the product, that is to say, if the fault is caused by an electronic board, wiring, a mechanical component, a sensor, etc.). Document EP0884701 discloses an household electrical appliance and a remote service centre which may communicate with the electrical appliance using a telephone line and an IC card, the IC card being connectable with the electrical appliance and with the telephone line terminal.

Document WO 2006/135758 discloses a remote service center which communicates with an appliance wirelessly to monitor the appliance, including low level components of the appliance either passively or actively, and diagnoses a failure associated with a component of the appliance.

### Disclosure of the Invention

The aim of the present invention is to overcome the above- mentioned disadvantages by providing a portable technical assistance device and a technical assistance system comprising the device which is able to speed up technical assistance jobs.

Another aim of the present invention is to avoid substituting components which are operating correctly.

Another aim of the present invention is to produce a system able to guide technical assistance personnel during all operations necessary to repair the fault (locating spare parts, substitutions, invoicing, payment, etc.).

These and other aims, which will become more apparent in the description which follows, are achieved in accordance with the invention by a portable technical assistance device having the structural and functional features described in the appended independent claims, while other embodiments of the device according to the invention are described in the dependent claims.

### Brief Description of the Drawings

The invention will now be described in more detail with reference to the accompanying drawings, which illustrate a nonlimiting preferred embodiment of it.
Figure 1 is a schematic illustration of a technical assistance system in accordance with the invention;
Figure 2 is a block diagram of a method for locating a fault implemented by the portable technical assistance device.

In this description, the term "diagnostics information" refers to information about the efficiency of particular internal components of a household electrical appliance. Diagnostics information is expressed by the value of a predetermined set of characteristic operating parameters of a household electrical appliance and cannot cover all cases of malfunction. For example, in the case of a freezer, typical diagnostics information relates to the number of times the preservation temperature adopted values lower than a predetermined value, the number of times a compressor protector was activated, etc.

The term "current operating information" refers to information relating to the current operating parameters of a household electrical appliance or one of its components. This is also known as operating information.

The term "statistical information" refers to information about statistical operating data, therefore, data indicating the state of the above-mentioned components. For example, in the case of a washing machine, statistical information relates to the number of washes associated with the different types of fabric, washing temperatures and the average spin speed selected by the user, the average water hardness value, the average number of rinses carried out, etc.

### Detailed Description of the Preferred Embodiments of the Invention

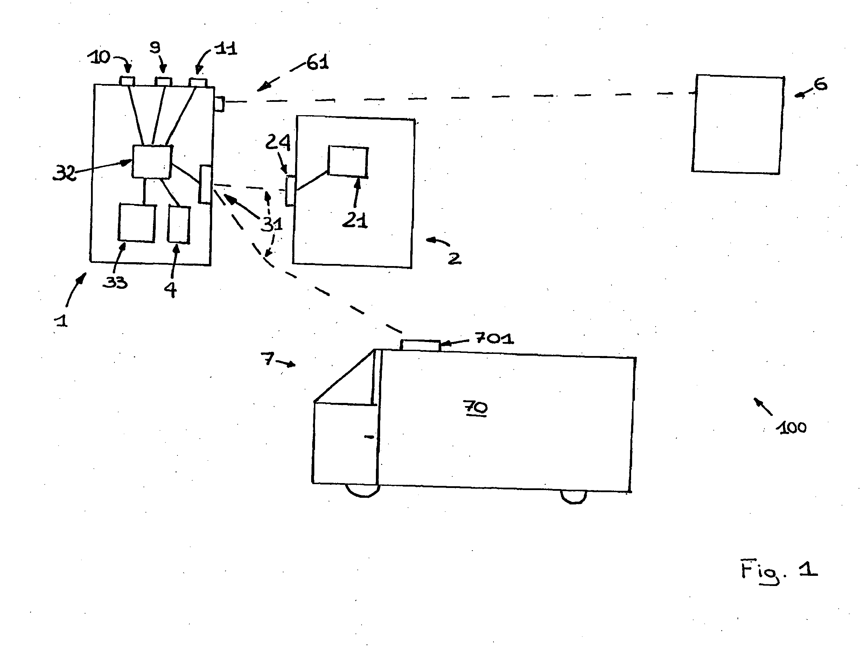

With reference to Figure 1, the numeral 1 denotes a portable technical assistance device for a household electrical appliance comprising first data communication means 31. For example, the portable device 1 consists of a palmtop computer. The first data communication means 31 can be operatively connected to a household electrical appliance 2 to allow data exchange. For example, the first communication means 31 are used to transfer current operating information and/or diagnostics information and/or statistical information, from a household electrical appliance 2 to the portable device 1.

The portable technical assistance device 1 comprises data processing means 32 operatively connected to the first communication means 31. The connection allows the transfer of data between the data processing means 32 and the first communication means 31 and is preferably an electrical connection.

The portable technical assistance device 1 also comprises a user interface 33 operatively communicating with the data processing means 32.

The user interface 33 comprises a display and means which allow the user to control the portable device 1. For example, the control means comprise keys, but they could comprise voice control systems.

The data processing means 32 comprise means 320 for locating and diagnosing a fault in a household electrical appliance 2. The means 320 for locating and diagnosing the fault process the information relative to parameters linked to household electrical appliance 2 operation, said information coming through the first communication means 31.

The locating and diagnosing means 320 consist, together with their sub-components, of hardware and/or software and/or firmware in the data processing means 32.

Advantageously, the means 320 for locating and diagnosing the fault process information about the temporal trend of the parameters linked to household electrical appliance 2 operation.

Advantageously, the means 320 for locating and diagnosing the fault process the current operating information and/or the diagnostics information and/or the statistical information.

The data processing means 32 have a high level of processing power. They are integrated in the portable device 1 outside a household electrical appliance 2. The portable device 1 is made available to the technical assistance personnel who carry out the jobs in the field. This means that there is no need for every household electrical appliance 2 to be fitted with an additional hardware device able to implement algorithms which require a high level of processing power and which allow the fault to be located. This allows a significant economic saving which may obviously make a product particularly competitive on the market.

Advantageously, the first communication means 31 are wireless.

In particular, the first communication means 31 use a radio frequency type connection: advantageously, the radio frequency connection uses Bluetooth technology. Alternatively, the first communication means 31 use ;a wired connection which connects a portable technical assistance device 1 asynchronous serial line to a household electrical appliance 2 communication port.

The portable device 1 comprises second data communication means 61 which can be connected to a remote centre 6 to allow further data exchange. The second communication means 61 are also wireless. Advantageously, the second communication means 61 use a telephone connection: advantageously the telephone connection uses a mobile telephone network, in particular using GPRS technology.

Advantageously, the portable technical assistance device 1 comprises a memory 4 used to store technical documentation relative to various types of household electrical appliances 2. Advantageously, the technical documentation is preset and may comprise, for each household electrical appliance, the instruction manual, technical drawings, information about the main faults found on that particular household electrical appliance, etc. Alternatively, the documentation is not preset and may be supplied by a remote centre 6 using the second communication means 61.

The processing means 32 are connected to the memory 4 and, upon receiving a command from the user interface 33, access the memory 4 and make the documentation available to the technical assistance personnel via the user interface 33, for example a display.

The portable device 1 comprises an electronic diary to allow technical assistance personnel to make appointments for and organise repair jobs. Technical assistance personnel interact with the electronic diary via the user interface 33. This means that the technical assistance personnel always have the jobs to be done under control. The electronic diary allows at least the date, time and place of the repair job to be saved.

Advantageously, the portable device 1 comprises an optical sensor 11 for detecting an identification code associated with a household electrical appliance 2. The optical sensor 11 is connected to the data processing means 32. The data processing means 32 comprises means for comparing the identification code detected by the optical sensor 11 with a corresponding identification code stored in the memory 4. The optical sensor 11 advantageously comprises a bar code reader. This makes available some useful information even in the case of a household electrical appliance 2 not set up to dialogue with the portable device 1 using the first communication means 31. Almost all household electrical appliances 2 have a bar code identifying them on the outer shell.

For example, the portable device 1 memory 4 may comprise the history of technical assistance jobs for each identification code detected by the optical sensor 11. For example, this allows the technical assistance personnel to check if in the past: the household electrical appliance 2 examined has already been repaired, a similar problem occurred, predetermined components were repaired or substituted, etc. It also allows immediate recognition of the type of household electrical appliance model and a search in the memory 4 for useful information relating to that model (instruction manual, most common faults, etc.).

Advantageously, the portable device 1 comprises satellite navigation means to help technical assistance personnel reach the site of the repair job easily. The satellite navigation means comprise a GPS aerial and an application software which clearly shows the information received by the GPS aerial, referring to a map suitably displayed by the user interface 33 (in particular on the display) of the portable technical assistance device 1. This helps the technical assistance personnel, wherever they are, to reach the home or the place where a household electrical appliance 2 is used.

Advantageously, the device 1 comprises means 9 for printing a hard copy report about the repair job. The report may, for example, summarise which components were substituted during the repair job and/or allow a receipt to be printed which shows the cost of the repair job.

Advantageously, the portable device 1 comprises a swipe card reader 10 so that the repair job can be paid for using a magnetic card such as a credit card, etc.

Advantageously, the means 320 for locating and diagnosing the fault comprise means 13 for comparing the information about parameters linked to household electrical appliance 2 operation with preset values for correct operation of those parameters, the information coming through the first communication means 31.

The means 320 for locating and diagnosing the fault may comprise means 14 for analysing information relative to the correct operation of the individual components of a household electrical appliance 2. The analysis means 14 are activated by a fault identified by the comparison means 13, the fault being identified by the fact that the values of the information relative to the operating parameters of a household electrical appliance 2 and the preset values for correct operation of those parameters do not match.

Advantageously, the analysis means 14 implement a procedure comprising the steps of:
- using the first communication means 31 to send an activation signal for the individual components of a household electrical appliance 2;
- comparing the values of the current operating information of the individual components of a household electrical appliance 2 with correct operation values, the information being obtained through the first communication means 31.

The procedure implemented by the analysis means 14 comprises the step of verifying the fault using the statistical information of an individual component. For example, if the statistical data in a washing machine indicates that the activation time of a heating element for heating the washing liquid, each time it is detected, has values which are increasingly high, it may be inferred that the malfunctioning of a household electrical appliance 2 reported by the user could be attributable to said heating element, and in particular to an increase in the thickness of lime scale on the heating element.

The comparison means 13 comprise first means 131 for comparing diagnostics information relative to the operating parameters of a household electrical appliance 2 with preset values for correct operation of those parameters.

The analysis means 14 comprise first analysis means 141 activated by a fault identified by the first comparison means 131, the fault being identified by the fact that the values of the diagnostics information relative to the operating parameters of a household electrical appliance 2 and the preset values for correct operation of those parameters do not match.

The first analysis means 141 analyse the information of at least one component previously associated with the fault detected by the first comparison means 131, the information coming through the first communication means 31.

The comparison means 13 comprise second means 132 for comparing current operating information relative to the operating parameters of a household electrical appliance 2 with preset values for correct operation of those parameters.

The analysis means 14 comprise second analysis means 142 activated by a fault identified by the second comparison means 132, the fault being identified by the fact that the values of the current operating information relative to the operating parameters of a household electrical appliance 2 and the preset values for correct operation of those parameters do not match.

If the first analysis means 141 fail to identify a fault, the second comparison means 132 are activated.

If the first comparison means 131 fail to identify a fault, the second comparison means 132 are activated.

If the second comparison means 132 identify a fault, the second means 142 for analysis of the correct operation of a component are activated, the second analysis means 142 analysing the operating information of at least one individual component of a household electrical appliance 2.

The second analysis means 142 analyse the operating information of at least one individual component previously associated with the fault detected by the second comparison means 132.

The second analysis means 142 analyse the operating information of individual components of a household electrical appliance previously associated with the fault detected by the second comparison means 132.

The second analysis means 142 analyse, one after another, individual components of a household electrical appliance previously associated with a fault, until information is identified indicating a faulty component of a household electrical appliance 2. In one particular construction solution the components of a household electrical appliance which can be analysed by the second analysis means 142 may always be the same, irrespective of the fault.

The procedure implemented by the analysis means 14 is implemented separately by both the first and second analysis means 141, 142. In particular, the first and second analysis means 141, 142 may coincide with one another.

Advantageously, the portable device 1 data processing means 32 comprise means 130 for indicating potential causes of malfunctions, said causes being previously associated with the corresponding malfunctions and saved in the portable device 1. The indicator means 130 can be consulted by the technical assistance personnel, using the user interface 33 to manually select the malfunction reported by the user.

The present invention also relates to a technical assistance system 100 for an electrical device, comprising a household electrical appliance 2 in turn comprising an electronic control system 21 comprising means for detecting parameters linked to operation of the household electrical appliance 2. The detector means allow access to correct operating information, statistical information, diagnostics information. The household electrical appliance 2 also comprises a communication interface 24 operatively connected to the electronic control system 21 so that the household electrical appliance 2 can communicate with the outside.

The technical assistance system 100 also comprises a portable technical assistance device 1 of the type previously indicated and outside the household electrical appliance 2. Advantageously, the portable device 1 first communication means 31 can be operatively connected to the communication interface 24.

Advantageously, the household electrical appliance comprises storage means for recording information about the temporal trend of the parameters linked to household electrical appliance 2 operation.

The technical assistance system 100 comprises a remote assistance centre 6. The portable technical assistance device 1 can be connected by the second communication means 61 to the remote centre 6 to allow further data exchange. Advantageously, the second communication means 61 are wireless.

The portable technical assistance device 1 comprises in its memory a program which can be implemented by the household electrical appliance 2 electronic control system 21. The program can be transferred from the portable device 1 to the household electrical appliance 2 through the first communication means 31. Said program which can be implemented by the control system 21 for example comprises an update of the household electrical appliance operating software. Said program may be saved in the portable device 1 previously, or alternatively when required it is transmitted to the portable device 1 from the remote assistance centre 6 through the second communication means 61.

Advantageously, upon receiving the command from the user interface 33, the technical assistance system 100 implements a procedure in which:
- through the second communication means 61, the data processing means 32 send the remote centre 6 a request for technical documentation relative to a household electrical appliance 2 to be repaired;
- the remote centre 6 sends the data processing means 32 the documentation requested;
- the processing means 32 make said documentation available to the technical assistance personnel through the user interface 33.

Said technical documentation may, for example, comprise user manuals or connection diagrams for a particular household electrical appliance 2.

Advantageously, through the second communication means 61, upon receiving the command from the user interface 33, the data processing means 32 send the remote centre 6 a request to supply a spare part for a household electrical appliance 2 to be repaired.

In response to the request to supply a spare part, through the first communication means 31, the remote centre 6 sends the portable device 1 data processing means 32 a response indicating the date when the spare part will be available.

Advantageously, the portable device 1 comprises the electronic diary to allow technical assistance personnel to make appointments for and organise repair jobs.

The data processing means 32 compare the period of time starting on the date indicated by the remote centre 6 when the spare part will be available with the working time slots in the electronic diary that are free of work commitments, using the user interface 33 to suggest the first date available to make a new appointment.

In one particular solution, the technical assistance system 100 comprises a vehicle 7 comprising a warehouse 70 which is mobile with the vehicle 7. The vehicle 7 is used by technical assistance personnel to reach the site of the repair job. The mobile warehouse 70 comprises a transceiver device 701 connected to the portable device 1 first communication means 31. Using the first communication means 31, the portable device 1 data processing means 32 send the mobile warehouse 70 transceiver device 701 a request to check the availability in the mobile warehouse 70 of a spare part and, using the first communication means 31, makes the response available through the user interface 33.

In one alternative solution, the portable device 1 comprises the memory 4 in which technical documentation relative to various types of household electrical appliances 2 is stored. The technical assistance system 100 comprises a vehicle 7 comprising a warehouse 70 which is mobile with the vehicle 7. The vehicle 7 is used by technical assistance personnel to reach the site of the repair job. The portable device 1 data processing means 32 compare a spare part identification code with that of a list of spare parts on the vehicle 7 and pre-recorded in the portable technical assistance device 1 memory 4.

The technical assistance system 100 comprises a meter for measuring household electrical appliance 2 electrical quantities, the meter being operatively connected to the household electrical appliance 2. The data processing means 32 can be operatively connected to the meter using the first communication means 31 to acquire the data measured by the meter.

The meter is inserted between the household electrical appliance 2 mains power supply and the household electrical appliance 2 itself. The meter can dialogue directly with the portable device 1 through the first communication means 31. Advantageously, the portable device 1 simultaneously communicates with the household electrical appliance 2 and with the meter, preferably wirelessly in point-to-multipoint mode (for example using Bluetooth technology). In this way, the locating of a household electrical appliance 2 fault is certainly simpler and more reliable, since the electrical quantities measured by the meter add to the information generated by the household electrical appliance 2, and in particular the household electrical appliance 2 current operating information.

The present invention also relates to a method for locating a household electrical appliance fault using the portable technical assistance device 1.

The method comprises the following steps:
- a step of receiving information about parameters linked to household electrical appliance 2 operation;
- a step of comparing the parameter values detected with preset values for those parameters indicating a correct operating situation. Said step is implemented by the analysis means 14.

Advantageously, the parameters are linked to household electrical appliance 2 current operation. Current operation is defined using information generated by the household electrical appliance 2 electronic control system 21 and if necessary also from a meter for measuring electrical quantities, if the meter is inserted between the household electrical appliance 2 mains power supply and the household electrical appliance 2 itself.

Alternatively, or in addition, the parameters are linked to diagnostics information.

If the step of comparing the values of diagnostics parameters with preset values for those parameters indicating a correct operating situation does not reveal any faults, the method comprises the step of comparing the values of the current operating parameters of a household electrical appliance with the preset values for those parameters indicating a correct operating situation. Said step is implemented by the second comparison means 132.

If said comparison step reveals a fault, the method comprises the steps of:
i) identifying a list comprising at least one component of a household electrical appliance, malfunctioning of each component in said list being identified in advance as a potential cause of the appearance of a corresponding fault. The list may even comprise only one component.
ii) implementing the following procedure:
   - comparing the values of the current operating information of a component with the preset values for correct operation;
   - if the comparison step does not reveal any faults, repeating the procedure with another component in the list until the end of the list is reached.

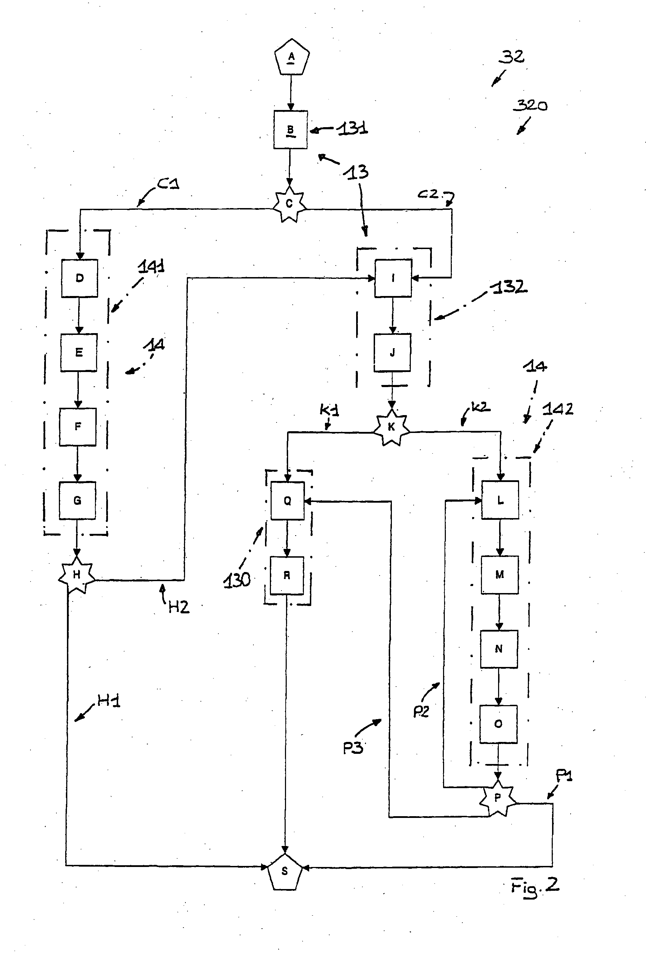

With reference to the block diagram in Figure 2 the following is a detailed description of the method for locating a fault in a household electrical appliance.

In particular, a list of reference characters allows a meaning to be associated with each letter indicating a block in Figure 2. A step in the method is associated with each block.

Letter "A": start.

Letter "B": portable device 1 reading of diagnostics information; said diagnostics information previously obtained from a household electrical appliance and transferred to the portable device 1 through the first communication means 31. Advantageously, this step is implemented by the first comparison means 131.

Letter "C": branching according to whether or not the diagnostics information reveals a fault. If the diagnostics information shows that a fault has occurred, the method comprises the steps indicated by the blocks along the branch labelled C1, otherwise it comprises the steps indicated by the blocks along the branch labelled C2.

Letter "D": identification of the household electrical appliance component connected to the fault. This component is identified by the portable device 1. Identification of the component connected to the fault is suggested by the diagnostic data item not in line with the correct operating value.

Letter "E": activation of the household electrical appliance 2 component indicated by the block labelled "D". This step may involve the transfer from the portable device 1 to the household electrical appliance 2, through the first communication means 31, of a command, recognised and therefore executed by the household electrical appliance 2 control software, resulting in the activation of that individual component or in any case of a group of components comprising the component being examined.

Letter "F": verification of the fault with information about the current operation of the component identified by the block labelled "E". After activation of the component, the values relative to operating parameters are detected and compared with the optimum values for those parameters.

Letter "G": verification of the fault with statistical information for the component identified by the block labelled "E". This step compares the values of statistical information with current operating information. This step is not strictly necessary, above all if the current operating information (block labelled "F") verified the fault.

The steps of the blocks labelled "D", "E", "F", "G" are advantageously implemented by the first analysis means 141.

Letter "H" : branching depending on whether or not the fault was verified. If the fault was verified the method reaches its conclusion through branch H1 which leads to the end of method block labelled "S". Alternatively, the method comprises the steps identified by the blocks along branch H2.

Letter "I": reading of household electrical appliance current operating information.

Letter "J": comparison of current operating information with a known correct operation reference state.

The steps implemented by the blocks labelled "I" and "J" are implemented by the second comparison means 132.

Letter "K": branching depending on whether or not the current operating information matches the known correct operation reference state information. In the event of a match the method comprises the steps indicated by the blocks along branch K1, otherwise the method comprises the steps indicated by the blocks along branch K2.

Letter "L": identification of a household electrical appliance component "i" which is the potential cause of a corresponding fault identified by the block labelled "K". Advantageously, the component "i" is included in a predetermined list of components which, if they were to develop a fault, could cause the malfunction.

Letter "M": activation of the component "i", by transferring a suitable activation command through the first communication means 31.

Letter "N": verification of the fault with component "i" current operating information.

Letter "0": verification of the fault with component "i" statistical information.

The steps of the blocks labelled "L", "M", "N", "O" are advantageously implemented by the second analysis means 142. Letter "P": branching depending on whether or not the component "i" is broken. If the fault was verified the method reaches its conclusion along branch P1 which leads to the end of method block labelled "S". Alternatively, the method comprises

(branch P2) iterative repetition of blocks L, M, N and if necessary 0 for all components on the predetermined list of components which, if they were to develop a fault, could cause the malfunction detected by the block labelled K. The iteration is stopped if the faulty component is identified and in that case the method is concluded. Once all components on the list have been analysed, if the fault has still not been located, the steps identified by the blocks along branch P3 are implemented. Letter "Q" : recording of the malfunction reported by the user on the portable device 1. Letter "R" : the portable device 1 suggests several possible faults associated with the malfunction reported. This step is implemented using historical data relative to faults which occurred in the past in the type of product to which the household electrical appliance 2 belongs. Such historical data may be continuously processed by suitable software (known to home automation sector technical personnel as a "system expert"), either in the portable technical assistance device 1, or preferably in a remote centre 6, to which the portable device 1 can connect using the second communication means 61. The steps implemented by the blocks labelled "Q" and "R" are implemented by the means 130 for indicating potential causes of malfunctions. Letter "S" : end. The invention brings important advantages.

First, it allows ineffectual substitutions of household electrical appliance components to be avoided. It also allows the time required for a job by specialised technical personnel to be reduced and significantly contributes to the problem being solved at the first visit by technical assistance personnel. Another important advantage is that it helps technical assistance personnel during all of the various steps of a repair job. Moreover, all details of the invention may be substituted by other technically equivalent elements.

In practice, the embodiments of the invention may be made from any material, and in any size, depending on requirements.

## Claims

1. A portable technical assistance device for a household electrical appliance, **characterised in that** it comprises:
- first data communication means (31) which can be operatively connected to a household electrical appliance (2) to allow data exchange;
- data processing means (32) operatively connected to the first communication means (31);
- a user interface (33) operatively communicating with the data processing means (32) ;
the data processing means (32) comprising means (320) for locating and diagnosing a fault in a household electrical appliance (2), the means (320) for locating and diagnosing the fault processing the information relative to parameters linked to household electrical appliance (2) operation, said information coming through the first communication means (31), wherein
the means (320) for locating and diagnosing the fault comprise means (13) for comparing information relative to parameters linked to household electrical appliance (2) operation with preset values for correct operation of those parameters, the information coming through the first communication means (31), wherein
the means (320) for locating and diagnosing the fault comprise means (14) for analysing information relative to the correct operation of the individual components of a household electrical appliance (2), the analysis means (14) being activated by a fault identified by the comparison means (13), the fault being identified by the fact that the values of the information relative to the operating parameters of a household electrical appliance (2) and the preset values for correct operation of those parameters do not match, wherein
the comparison means (13) comprise first means (131) for comparing diagnostics information relative to the operating parameters of a household electrical appliance (2) with preset values for correct operation of those parameters,
the analysis means (14) comprise first analysis means (141) activated by a fault identified by the first comparison means (131), the fault being identified by the fact that the values of the diagnostics information relative to the operating parameters of a household electrical appliance (2) and the preset values for correct operation of those parameters do not match, wherein
the first analysis means (141) are adapted to analyse the information of at least one component previously associated with the fault detected by the first comparison means (131), the information coming through the first communication means (31), **characterized in that**
the comparison means (13) further comprise second means (132) for comparing current operating information relative to the operating parameters of a household electrical appliance (2) with preset values for correct operation of those parameters, and the analysis means (14) further comprise second analysis means (142) activated by a fault identified by the second comparison means (132), the fault being identified by the fact that the values of the current operating information relative to the operating parameters of a household electrical appliance (2) and the preset values for correct operation of those parameters do not match, wherein the comparison means (13) and the analysis means (14) are adapted such that if the first analysis means (141) fail to identify a fault, the second comparison means 132 are activated, and if the first comparison means (131) fail to identify a fault, the second comparison means (132) are activated.

2. The device according to claim 1, **characterised in that** the means (320) for locating and diagnosing the fault process the current operating information and/or the diagnostics information and/or the statistical information.

3. The device according to claim 1 or 2 , **characterised in that** the first communication means (31) are wireless, in particular using a radio frequency connection.

4. The device according to any of the foregoing claims, **characterised in that** it comprises second data communication means (61) which can be connected to a remote centre (6) for further data exchange, the second communication means (61) being wireless, in particular the second communication means (61) using a telephone connection.

5. The device according to any of the foregoing claims, **characterised in that** it comprises a memory (4) in which technical documentation relative to various types of household electrical appliances (2) is stored.

6. The device according to any of the foregoing claims, **characterised in that** it comprises an optical sensor (11) for detecting an identification code associated with a household electrical appliance (2), the optical sensor (11) being connected to the data processing means (32).

7. The device according to claim 6 when it depends directly or indirectly on claim 5, **characterised in that** for each identification code detected by the optical sensor (11) the memory (4) contains the history of technical assistance jobs, the data processing means (32) comprising means for comparing the identification code detected by the optical sensor (11) with a corresponding identification code stored in the memory (4).

8. The device according to any of the foregoing claims, **characterised in that** it comprises a swipe card reader (10), allowing the repair job to be paid for using a magnetic card.

9. The device according to any of the foregoing claims, **characterised in that** the analysis means (14) further comprise:
means for sending, using the first communication means (31), an activation signal for individual components of the household electrical appliance (2);
means for comparing the values of the current operating information of the individual components of a household electrical appliance (2) with correct operation values, the information being obtained through the first communication means (31).

10. A technical assistance system for an electrical device, **characterised in that** it comprises:
i) a household electrical appliance (2) comprising:
- an electronic control system (21) comprising means for detecting parameters linked to household electrical appliance (2) operation;
- a communication interface (24) operatively connected to the electronic control system (21) so that the household electrical appliance (2) can communicate with the outside;
ii) a portable technical assistance device (1) in accordance with any of the claims from 1 to 9 the portable device (1) being outside the household electrical appliance, there being the possibility of operatively connecting the first communication means (31) to the communication interface (24).

11. The technical assistance system according to claim 10
**characterised**
**in that** the household electrical appliance (2) comprises storage means which record information relative to the temporal trend of the parameters linked to household electrical appliance (2) operation.

12. The technical assistance system according to claim 10 or 11
**characterised in that** the portable technical assistance device (1) comprises in the memory a program which can be implemented by the household electrical appliance (2) electronic control system (21), there being the possibility of transferring the program from the portable device (1) to the household electrical appliance (2) through the first communication means (31).

13. The technical assistance system according to any of the claims from 10 to 12
**characterised in that** it comprises a remote assistance centre (6) and a portable device (1) according to claim 4 capable of data exchange with the remote centre (6) through the second communication means (61).

14. The technical assistance system according to claim 13 **characterised**
**in that** upon receiving a command from the user interface (33), through the second communication means (61), the data processing means (32) send the remote centre (6) a request to supply a spare part for a household electrical appliance (2) to be repaired, the remote centre (6), in response to the request to supply a spare part, through the first communication means (31), sending the portable device (1) data processing means (32) a response indicating the date when the spare part will be available.

15. The technical assistance system according to any of the claims from 10 to 14
**characterised in that** it comprises a vehicle (7) comprising a warehouse (70) which is mobile with the vehicle (7), the vehicle (7) being used by technical assistance personnel to reach the site of the repair job, the mobile warehouse (70) comprising a transceiver device (701) connected to the portable device (1) first communication means (31) ; the portable device (1) data processing means (32), through the first communication means (31), sending the mobile warehouse (70) transceiver device (701) a request to check the availability in the mobile warehouse (70) of a spare part and, using the first communication means (31), making the response available through the user interface (33).

16. The technical assistance system according to any of the claims from 10 to 15
**characterised in that** it comprises a meter for measuring household electrical appliance (2) electrical quantities, the meter being operatively connected to the household electrical appliance (2), there being the possibility of operatively connecting the data processing means (32) to the meter using the first communication means (31) to acquire the data measured by the meter.

17. A method for locating a household electrical appliance fault using the portable technical assistance device (1) according to any of the claims from 1 to 9
**characterised in that** it comprises the following steps :
- a step of receiving information about parameters linked to household electrical appliance (2) operation;
- a step of comparing the parameter values detected with preset values for those parameters indicating a correct operating situation.

## Patentansprüche

1. Tragbare technische Unterstützungsvorrichtung für ein elektrisches Haushaltsgerät, **dadurch gekennzeichnet, dass** sie umfasst:
- erste Daten-Kommunikationsmittel (31), welche betriebsmäßig mit einem elektrischen Haushaltsgerät (2) verbunden werden können, um einen Datenaustausch zu erlauben;
- Datenverarbeitungsmittel (32), welche betriebsmäßig mit den ersten Kommunikationsmitteln (31) verbunden sind;
- eine Benutzerschnittstelle (33), welche betriebsmäßig mit den Datenverarbeitungsmitteln (32) kommuniziert;
wobei die Datenverarbeitungsmittel (32) Mittel (320) zum Lokalisieren und Diagnostizieren eines Fehlers in einem elektrischen Haushaltsgerät (2) umfassen, wobei die Mittel (32) zum Lokalisieren und Diagnostizieren des Fehlers die Informationen bezüglich Parametern verarbeiten, welche mit dem Betrieb des elektrischen Haushaltsgeräts (2) in Verbindung stehen, wobei die Informationen durch die ersten Kommunikationsmittel (31) kommen, wobei die Mittel (320) zum Lokalisieren und Diagnostizieren des Fehlers Mittel (13) zum Vergleichen von Informationen bezüglich Parametern, welche mit dem Betrieb des elektrischen Haushaltsgeräts (2) in Verbindung stehen, mit zuvor festgelegten Werten für einen korrekten Betrieb dieser Parameter umfassen, wobei die Informationen durch die ersten Kommunikationsmittel (31) kommen, wobei die Mittel (320) zum Lokalisieren und Diagnostizieren des Fehlers Mittel (14) zum Analysieren von Informationen bezüglich den korrekten Betrieb der einzelnen Komponenten eines elektrischen Haushaltsgeräts (2) umfassen, wobei die Analysemittel (14) von einem von den Vergleichmitteln (13) identifizierten Fehler aktiviert werden,
wobei der Fehler durch die Tatsache identifiziert wird, dass die Werte der Informationen bezüglich den Betriebsparametern eines elektrischen Haushaltsgeräts (2) und die zuvor festgelegten Werte für einen korrekten Betrieb dieser Parameter nicht übereinstimmen, wobei die Vergleichsmittel (13) erste Mittel (131) zum Vergleichen von Diagnose-Informationen bezüglich den Betriebsparametern eines elektrischen Haushaltsgeräts (2) mit zuvor festgelegten Werten für einen korrekten Betrieb dieser Parameter umfasst,
wobei die Analysemittel (14) erste Analysemittel (141) umfassen, welche von einem von den ersten Vergleichsmitteln (131) identifizierten Fehler aktiviert werden, wobei der Fehler durch die Tatsache identifiziert wird, dass die Werte der Diagnose-Informationen bezüglich der Betriebsparameter eines elektrischen Haushaltsgeräts (2) und die zuvor festgelegten Werte für einen korrekten Betrieb dieser Parameter nicht übereinstimmen, wobei
die ersten Analysemittel (141) dazu eingerichtet sind, die Informationen von wenigstens einer Komponente zu analysieren, welche zuvor dem von den ersten Vergleichsmitteln (131) detektierten Fehler zugeordnet worden sind, wobei die Informationen durch die ersten Kommunikationsmittel (31) kommen, **dadurch gekennzeichnet, dass** die Vergleichsmittel (13) ferner zweite Mittel (132) zum Vergleichen von momentanen Betriebsinformationen bezüglich den Betriebsparametern eines elektrischen Haushaltsgeräts (2) mit zuvor festgelegten Werten für einen korrekten Betrieb dieser Parameter umfassen, und die Analysemittel (14) ferner zweite Analysemittel (142) umfassen, welche von einem von den zweiten Vergleichsmitteln (132) identifizierten Fehler aktiviert werden, wobei der Fahler durch die Tatsache identifiziert wird, dass die Werte der momentanen Betriebsinformationen bezüglich den Betriebsparametern eines elektrischen Haushaltsgeräts (2) und die zuvor festgelegten Werte für einen korrekten Betrieb dieser Parameter nicht übereinstimmen, wobei die Vergleichsmittel (13) und die Analysemittel (14) derart eingerichtet sind, dass wenn die ersten Analysemittel (141) daran scheitern, einen Fehler zu identifizieren, die zweiten Vergleichsmittel (132) aktiviert werden, und wenn die ersten Vergleichsmittel (131) daran scheitern, einen Fehler zu identifizieren, die zweiten Vergleichsmittel (132) aktiviert werden.

2. Vorrichtung nach Anspruch 1, **dadurch gekennzeichnet, dass** die Mittel (320) zum Lokalisieren und Diagnostizieren des Fehlers die momentanen Betriebsinformationen oder/und die Diagnose-Informationen oder/und die statistischen Informationen verarbeiten.

3. Vorrichtung nach Anspruch 1 oder 2, **dadurch gekennzeichnet, dass** die ersten Kommunikationsmittel (31) drahtlos sind, insbesondere unter Verwendung einer Funkfrequenz-Verbindung.

4. Vorrichtung nach einem der vorhergehenden Ansprüche, **dadurch gekennzeichnet, dass** sie zweite Daten-Kommunikationsmittel (61) umfasst, welche mit einem entfernten Zentrum (6) für einen weiteren Datenaustausch verbunden werden können, wobei die zweiten Kommunikationsmittel (61) drahtlos sind, insbesondere die zweiten Kommunikationsmittel (61) eine Telefonverbindung verwenden.

5. Vorrichtung nach einem der vorhergehenden Ansprüche, **dadurch gekennzeichnet, dass** sie einen Speicher (4) umfasst, in welchem technische Dokumentation zu verschiedenen Typen von elektrischen Haushaltsgeräten (2) gespeichert ist.

6. Vorrichtung nach einem der vorhergehenden Ansprüche, **dadurch gekennzeichnet, dass** sie einen optischen Sensor (11) zum Detektieren eines Identifikationscodes umfasst, welcher einem elektrischen Haushaltsgerät (2) zugeordnet ist, wobei der optische Sensor (11) mit den Datenverarbeitungsmitteln (32) verbunden ist.

7. Vorrichtung nach Anspruch 6, wenn dieser direkt oder indirekt von Anspruch 5 abhängt, **dadurch gekennzeichnet, dass** für jeden von dem optischen Sensor (11) detektierten Identifikationscode der Speicher (4) die Historie von technischen Unterstützungsaufgaben enthält, wobei die Datenverarbeitungsmittel (32) Mittel zum Vergleichen des von dem optischen Sensor (11) detektierten Identifikationscodes mit einem entsprechenden in dem Speicher (4) gespeicherten Identifikationscode umfassen.

8. Vorrichtung nach einem der vorhergehenden Ansprüche, **dadurch gekennzeichnet, dass** sie einen Durchzugleser (10) umfasst, welcher erlaubt, die Reperaturaufgabe unter Verwendung einer Magnetkarte zu bezahlen.

9. Vorrichtung nach einem der vorhergehenden Ansprüche, **dadurch gekennzeichnet, dass** die Analysemittel (14) ferner umfassen:
Mittel zum Senden eines Aktivierungssignals für einzelne Komponenten des elektrischen Haushaltsgeräts (2) unter Verwendung der ersten Kommunikationsmittel (31);
Mittel zum Vergleichen der Werte der momentanen Betriebsinformationen der einzelnen Komponenten eines elektrischen Haushaltsgeräts (2) mit korrekten Betriebswerten, wobei die Informationen durch die ersten Kommunikationsmittel (31) erhalten werden.

10. Technisches Unterstützungssystem für eine elektrische Vorrichtung, **dadurch gekennzeichnet, dass** es umfasst:
i) ein elektrisches Haushaltsgerät (2), umfassend:
- ein elektronisches Steuer-/Regelsystem (21), welches Mittel zum Detektieren von Parametern umfasst, welche mit einem Betrieb des elektrischen Haushaltsgeräts (2) in Verbindung stehen;
- eine Kommunkationsschnittstelle (24), welche betriebsmäßig mit dem elektronischen Steuer-/Regelsystem (21) verbunden ist, so dass das elektrische Haushaltsgerät (2) nach außen kommunizieren kann;
ii) eine tragbare technische Unterstützungsvorrichtung (1) nach einem der Ansprüche 1 bis 9, wobei die tragbare Vorrichtung (1) sich außerhalb des elektrischen Haushaltsgeräts befindet, wobei die Möglichkeit besteht, die ersten Kommunikationsmittel (31) mit der Kommunikationsschnittstelle (24) betriebsmäßig zu verbinden.

11. Technisches Unterstützungssystem nach Anspruch 10, **dadurch gekennzeichnet, dass** das elektrische Haushaltsgerät (2) Speichermittel umfasst, welche Informationen bezüglich dem zeitlichen Verlauf der mit einem Betrieb des elektrischen Haushaltsgeräts (2) in Verbindung stehenden Parameter aufnehmen.

12. Technisches Unterstützungssystem nach Anspruch 10 oder 11, **dadurch gekennzeichnet, dass** die tragbare technische Unterstützungsvorrichtung (1) in dem Speicher ein Programm umfasst, welches von dem elektronischen Steuer-/Regelsystem (21) des elektrischen Haushaltsgeräts (2) implementiert werden kann, wobei die Möglichkeit besteht, das Programm von der tragbaren Vorrichtung (1) durch die ersten Kommunikationsmittel (31) zu dem elektrischen Haushaltsgerät (2) zu übertragen.

13. Technisches Unterstützungssystem nach einem der Ansprüche 10 bis 12, **dadurch gekennzeichnet, dass** es ein entferntes Unterstützungszentrum (6) und eine tragbare Vorrichtung (1) nach Anspruch 4 umfasst, welche in der Lage ist, Daten mit dem entfernten Zentrum (6) durch die zweiten Kommunikationsmittel (61) auszutauschen.

14. Technisches Unterstützungssystem nach Anspruch 13, **dadurch gekennzeichnet, dass** auf ein Erhalten einer Anweisung von der Benutzerschnittstelle (33) hin, die Datenverarbeitungsmittel (32) durch die zweiten Kommunikationsmittel (61) dem entfernten Zentrum (6) eine Anfrage senden, ein Ersatzteil für ein zu reparierendes elektrisches Haushaltsgerät (2) zu liefern, wobei das entfernte Zentrum (6) als Reaktion auf die Anfrage, ein Ersatzteil zu liefern, durch die ersten Kommunikationsmittel (31) den Datenverarbeitungsmitteln (32) der tragbaren Vorrichtung (1) eine Antwort sendet, welche das Datum anzeigt, zu welcheem das Ersatzteil verfügbar sein wird.

15. Technisches Unterstützungssystem nach einem der Ansprüche 10 bis 14, **dadurch gekennzeichnet, dass** es ein Fahrzeug (7) umfasst, welches ein Lager (70) umfasst, welches mit dem Fahrzeug (7) beweglich ist, wobei das Fahrzeug (7) von technischem Unterstützungspersonal verwendet wird, um den Ort der Reparaturaufgabe zu erreichen, wobei das mobile Lager (70) eine Sendeempfänger-Vorrichtung (701) umfasst, welche mit den ersten Kommunikationsmitteln (31) der tragbaren Vorrichtung (1) verbunden ist; wobei die Datenverarbeitungsmittel (32) der tragbaren Vorrichtung (1) durch die ersten Kommunikationsmittel (31) der Sendeempfänger-Vorrichtung (701) des mobilen Lagers (70) eine Anfrage senden, die Verfügbarkeit eines Ersatzteils in dem mobilen Lager (70) zu überprüfen und unter Verwendung der ersten Kommunikationsmittel (31) die Antwort durch die Benutzerschnittstelle (33) verfügbar zu machen.

16. Technisches Unterstützungssystem nach einem der Ansprüche 10 bis 15, **dadurch gekennzeichnet, dass** es ein Messgerät zum Messen von elektrischen Größen des elektrischen Haushaltsgeräts (2) umfasst, wobei das Messgerät betriebsmäßig mit dem elektrischen Haushaltsgerät (2) verbunden ist, wobei die Möglichkeit besteht, die Datenverarbeitungsmittel (32) unter Verwendung der ersten Kommunikationsmittel (31) mit dem Messgerät betriebsmäßig zu verbinden, um die von dem Messgerät gemessenen Daten zu erhalten.

17. Verfahren zum Lokalisieren eines Fehlers eines elektrischen Haushaltsgeräts unter Verwendung der tragbaren technischen Unterstützungsvorrichtung (1) nach einem der Ansprüche 1 bis 9, **dadurch gekennzeichnet, dass** es die folgenden Schritte umfasst:
- einen Schritt eines Erhaltens von Informationen über Parameter, welche mit einem Betrieb des elektrischen Haushaltsgeräts (2) in Verbindung stehen;
- einen Schritt eines Vergleichens der detektierten Parameterwerte mit zuvor festgelegten Werten für diese Parameter, welche eine Situation eines korrekten Betriebs anzeigen.

## Revendications

1. Dispositif d'assistance technique portable pour un appareil électrique domestique, **caractérisé en ce qu'**il comporte :
- des premiers moyens de communication de données (31) qui peuvent être connectés fonctionnellement à un appareil électrique domestique (2) afin de permettre un échange de données ;
- des moyens de traitement de données (32) connectés fonctionnellement aux premiers moyens de communication (31) ;
- une interface utilisateur (33) communiquant fonctionnellement avec les moyens de traitement de données (32) ;
les moyens de traitement de données (32) comprenant des moyens (320) permettant de localiser et de diagnostiquer un défaut dans un appareil électrique domestique (2), les moyens (320) permettant de localiser et de diagnostiquer le défaut traitant l'information relative à des paramètres liés à un fonctionnement de l'appareil électrique domestique (2), ladite information venant à travers les premiers moyens de communication (31), dans lequel
les moyens (320) permettant de localiser et de diagnostiquer le défaut comportent des moyens (13) pour comparer l'information relative aux paramètres liés au fonctionnement de l'appareil électrique domestique (2) avec des valeurs préétablies pour un fonctionnement correct de ces paramètres, ladite information passant par les premiers moyens de communication (31), dans lequel les moyens (320) pour localiser et diagnostiquer le défaut comportent des moyens (14) permettant d'analyser une information relative au fonctionnement correct des composants individuels d'un appareil électrique domestique (2), les moyens d'analyse (14) étant activés par un défaut identifié par les moyens de comparaison (13), le défaut étant identifié par le fait que les valeurs de l'information relative aux paramètres de fonctionnement d'un appareil électrique domestique (2) et les valeurs préétablies pour un fonctionnement correct de ces paramètres ne coïncident pas, dans lequel les moyens de comparaison (13) comportent des premiers moyens (131) pour comparer une information de diagnostic relative aux paramètres de fonctionnement d'un appareil électrique domestique (2) avec des valeurs préétablies pour le fonctionnement correct de ces paramètres,
les moyens d'analyse (14) comprennent des premiers moyens d'analyse (141) activés par un défaut identifié par les premiers moyens de comparaison (131), le défaut étant identifié par le fait que les valeurs de l'information de diagnostic relative aux paramètres de fonctionnement d'un appareil électrique domestique (2) et les valeurs préétablies pour un fonctionnement correct de ces paramètres ne coïncident pas, dans lequel
les premiers moyens d'analyse (141) sont conçus pour analyser l'information concernant au moins un composant associé antérieurement au défaut détecté par les premiers moyens de comparaison (131), l'information passant par les premiers moyens de communication (31), **caractérisé en ce que**
les moyens de comparaison (13) comportent, de plus, des seconds moyens (132) pour comparer l'information de fonctionnement en cours relative aux paramètres de fonctionnement d'un appareil électrique domestique (2) avec des valeurs préétablies pour le fonctionnement correct de ces paramètres, et les moyens d'analyse (14) comportent, en outre, des seconds moyens d'analyse (142) activés par un défaut identifié par les seconds moyens de comparaison (132), le défaut étant identifié par le fait que les valeurs de l'information de fonctionnement en cours relative aux paramètres de fonctionnement d'un appareil électrique domestique (2) et les valeurs préétablies pour le fonctionnement correct de ces paramètres ne coïncident pas, dans lequel les moyens de comparaison (13) et les moyens d'analyse (14) sont conçus de telle sorte que, si les premiers moyens d'analyse (141) présentent une défaillance pour identifier un défaut, les seconds moyens de comparaison (132) sont activés, et si les premiers moyens de comparaison (131) ne réussissent pas à identifier un défaut, les seconds moyens de comparaison (132) sont activés.

2. Dispositif selon la revendication 1, **caractérisé en ce que** les moyens (320) permettant de localiser et de diagnostiquer le défaut traitent l'information de fonctionnement en cours et/ou l'information de diagnostic et/ou l'information statistique.

3. Dispositif selon la revendication 1 ou 2, **caractérisé en ce que** les premiers moyens de communication (31) sont des moyens sans fil, utilisant, en particulier, une connexion par radio fréquence.

4. Dispositif selon l'une quelconque des revendications précédentes, **caractérisé en ce qu'**il comprend des seconds moyens de communication de données (61), lesquels peuvent être connectés à un centre distant (6) en vue d'un échange supplémentaire de données, les seconds moyens de communication (61) étant sans fil, en particulier, les seconds moyens de communication (61) utilisant une connexion téléphonique.

5. Dispositif selon l'une quelconque des revendications précédentes, **caractérisé en ce qu'**il comporte une mémoire (4) dans laquelle une documentation technique relative à différents types d'appareils électriques domestiques (2) est stockée.

6. Dispositif selon l'une quelconque des revendications précédentes, **caractérisé en ce qu'**il comporte un capteur optique (11) pour détecter un code d'identification associé à un appareil électrique domestique (2), le capteur optique (11) étant connecté aux moyens de traitement de données (32).

7. Dispositif selon la revendication 6 lorsqu'elle dépend directement ou indirectement de la revendication 5, **caractérisé en ce que**, pour chaque code d'identification détecté par le capteur optique (11), la mémoire (4) contient l'historique des travaux d'assistance technique, les moyens de traitement de données (32) comportant des moyens pour comparer le code d'identification sélectionné par le capteur optique (11) avec le code d'identification correspondant stocké dans la mémoire (4).

8. Dispositif selon l'une quelconque des revendications précédentes, **caractérisé en ce qu'**il comporte un lecteur de carte à fente (10) permettant au travail de réparation d'être payé en utilisant une carte magnétique.

9. Dispositif selon l'une quelconque des revendications précédentes, **caractérisé en ce que** les moyens d'analyse (14) comprennent, de plus :
des moyens pour envoyer, en utilisant les premiers moyens de communication (31), un signal d'activation pour les composants individuels de l'appareil électrique domestique (2) ;
des moyens pour comparer les valeur de l'information de fonctionnement en cours des composants individuels d'un appareil électrique domestique (2) avec des valeurs de fonctionnement correct, l'information étant obtenue par l'intermédiaire des premiers moyens de communication (31).

10. Système d'assistance technique destiné à un dispositif électrique, **caractérisé en ce qu'**il comporte :
i) un appareil électrique domestique (2) comprenant :
- un système de contrôle électronique (21) comportant des moyens pour détecter des paramètres liés au fonctionnement de l'appareil électrique domestique (2) ;
- une interface de communication (24) connectée fonctionnellement au système de contrôle électronique (21) de façon que l'appareil électrique domestique (2) puisse communiquer avec l'extérieur ;
ii) un dispositif d'assistance technique portable (1) selon l'une quelconque des revendications 1 à 9, le dispositif portable (1) se trouvant à l'extérieur de l'appareil électrique domestique, la possibilité existant de connecter fonctionnellement les premiers moyens de communication (31) à l'interface de communication (24).

11. Système d'assistance technique selon la revendication 10, **caractérisé en ce que** l'appareil électrique domestique (2) comporte des moyens de stockage qui enregistrent une information relative à la tendance temporelle des paramètres liés au fonctionnement de l'appareil électrique domestique (2).

12. Système d'assistance technique selon la revendication 10 ou 11, **caractérisé en ce que** le dispositif d'assistance technique portable (1) comporte, dans la mémoire, un programme qui peut être mis en oeuvre par le système de contrôle électronique (21) de l'appareil électrique domestique (2), la possibilité de transférer le programme depuis le dispositif portable (1) jusqu'à l'appareil électrique domestique (2) par l'intermédiaire des premiers moyens de communication (31) existant.

13. Système d'assistance technique selon l'une quelconque des revendications 10 à 12, **caractérisé en ce qu'**il comprend un centre d'assistance distant (6) et un dispositif portable (1) selon la revendication 4 capable d'échanger des données avec le centre à distant (6) par l'intermédiaire des seconds moyens de communication (61).

14. Système d'assistance technique selon la revendication 13, **caractérisé en ce que**, lors de la réception d'une commande provenant de l'interface avec l'utilisateur (33), par l'intermédiaire des seconds moyens de communication (61), les moyens de traitement de données (32) envoient au centre distant (6) une requête pour fournir une pièce de rechange destinée à un appareil électrique domestique (2) à réparer, le centre distant (6), en réponse à la requête de fourniture d'une pièce de rechange par l'intermédiaire des premiers moyens de communication (31), transmet aux moyens de traitement de données (32) du dispositif portable (1) une réponse indiquant la date à laquelle la pièce de rechange sera disponible.

15. Système d'assistance technique selon l'une quelconque des revendications 10 à 14,
**caractérisé en ce qu'**il comporte un véhicule (7) comprenant un magasin (70) qui se déplace avec le véhicule (7), le véhicule (7) étant utilisé par du personnel d'assistance technique pour atteindre le site des travaux de réparation, le magasin mobile (70) comportant un dispositif émetteur-récepteur (701) connecté aux premiers moyens de communication (31) du dispositif portable (1) ; les moyens de traitement de données (32) du dispositif portable (1), par l'intermédiaire des premiers moyens de communication (31), transmettent au dispositif émetteur-récepteur (701) du magasin mobile (70) une requête pour vérifier la disponibilité dans le magasin mobile (70) d'une pièce de rechange et, en utilisant les premiers moyens de communication (31), rendent la réponse disponible par l'interface utilisateur (33).

16. Système d'assistance technique selon l'une quelconque des revendications 10 à 15,
**caractérisé en ce qu'**il comporte un appareil de mesure pour mesurer les grandeurs électriques de l'appareil électrique domestique (2), l'appareil de mesure étant connecté fonctionnellement à l'appareil électrique domestique (2), la possibilité existant de connecter fonctionnellement les moyens de traitement de données (32) à l'appareil de mesure (32) en utilisant les premiers moyens de communication (31) pour connaître les données mesurées par l'appareil de mesure.

17. Procédé permettant de localiser un défaut dans un appareil électrique domestique en utilisant le dispositif d'assistance technique portable (1) selon l'une quelconque des revendications 1 à 9, **caractérisé en ce qu'**il comporte les étapes suivantes :
- une étape de réception d'une information concernant des paramètres liés au fonctionnement de l'appareil électrique domestique (2) ;
- une étape de comparaison des valeurs de paramètre détectées avec des valeurs préétablies concernant ces paramètres indiquant un état de fonctionnement correct.
